# EUROPEAN PATENT SPECIFICATION

(11) **EP 2 129 223 B1**
(45) Date of publication and mention of the grant of the patent: **14.12.2016**
(21) Application number: 08716391.1
(22) Date of filing: 10.03.2008
(51) Int. Cl.: A01N 43/56, A01N 37/06, A01N 43/54, A01P 3/00, A01N 25/02

(54) **FUNGICIDAL COMPOSITIONS COMPRISING A CARBOXAMIDE DERIVATIVE, CYPRODINIL AND AN UNSATURATED FATTY ACID**
EIN KARBONSÄUREAMIDDERIVAT, CYPRODINIL UND EINE UNGESÄTTIGTE FETTSÄURE ENTHALTENDE FUNGIZIDE ZUSAMMENSETZUNG
COMPOSITION FONGICIDE COMPRENANT UN DERIVE DE CARBOXAMIDE ET UN ACIDE GRAS INSATURE

(30) Priority: 29.03.2007 EP 07006562; 04.04.2007 EP 07007011
(43) Date of publication of application: 09.12.2009
(73) Proprietor: Syngenta Participations AG, 4058 Basel (CH)
(72) Inventor: GUYON, Frederique, 4333 Muenchwilen (CH); LEUENBERGER, Simon, 4333 Muenchwilen (CH)
(74) Representative: Syngenta International AG
(86) International application number: PCT/EP2008/001881
(87) International publication number: WO 2008/119439

(56) References cited:
- EP-A- 0 806 141
- EP-A- 1 782 690
- WO-A-03/086073
- WO-A-2006/015865
- WO-A-2006/105888
- WO-A-2007/039215
- US-A- 5 366 995
- KOVALENKO I.V. ET AL.: "Article: Measurement of Soybean Fatty Acids by Near-Infrared Spectroscopy: Linear and Nonlinear Calibration Methods" JOURNAL OF THE AMERICAN OIL CHEMISTS' SOCIETY, vol. 83, no. 5, May 2006 (2006-05), pages 421-427, XP002534287

## Description

The present invention relates to a composition, such as an aqueous composition, comprising (i) a fungicidal pyrazole carboxamide, more specifically (i) 3-difluoromethyl-1-methyl-1H-pyrazole-4-carboxylic acid (2-bicyclopropylyl-phenyl)-amide (ii) cyprodinil and (iii) an unsaturated C₁₈-fatty acid selected from oleic acid, linoleic acid and linolenic acid, and to the use of said composition for controlling diseases on plants via its application to plant propagation material.

Fungicidal pyrazole carboxamides of formula 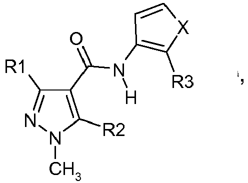 wherein R₁ is CH₃, CHF₂ or CF₃; R₂ is H, F or Cl; X is -S- or-CH=CH-; and R₃ is bicyclopropyl, 1,3-dimethylbutyl or 1,3,3-trimethylbutyl; are disclosed in WO 03/74491, EP-A-0737682 and WO 03/10149. Said pyrazole carboxamides, are effective against phytopathogenic fungi belonging to the class of ascomycetes, basidiomycetes and deuteromycetes and can be used as seed treatment fungicides. Some of the compounds described above are particularly effective against Ustilago spp., Rhizoctonia spp., Tilletia spp. and Microdochium spp.

EP-0-310-550 discloses the fungicide cyprodinil ((4-cyclopropyl-6-methyl-pyrimidin-2-yl)-phenyl-amine), which is effective against a number of diseases caused by ascomycetes or deuteromycetes and can also be used as seed treatment fungicide. Cyprodinil is particularly effective against Helminthosporium spp, Drechslera, spp, Botrytis, spp. Pseudocerosporella spp. and Erysiphe spp.

Fungicidal mixtures comprising the compound described above and cyprodinil are disclosed in WO 06/15865, WO 06/105888 and WO 05/41653. Such mixtures are of high interest for crop protection, especially for seed treatment, as the disease spectra of both fungicides are complementary, making said mixture suitable to control a broad spectrum of important diseases.

In seed treatment, fungicides are generally used in the form of solid or liquid formulations. Most solid formulations have the unfavourable property of dusting during handling. Out of this reason, liquid formulations are generally preferred by most end-users. The end-user typically dilutes the formulation with water. As aqueous formulations generally have a better water-miscibility compared to non-aqueous formulations, aqueous formulations are further preferred. Additionally aqueous formulations are typically not associated with high production costs.

Due to its broad disease spectrum the above-mentioned combination can be used in a large variety of crops and consequently under various climatic conditions. Out of this reason it is important to provide a formulation with good storage stability under a broad range of storage temperatures and humidity levels. As cyprodinil and the compound described above are both substantially water-insoluble compounds, the preparation of aqueous formulations, which have such a good storage-stability is particularly difficult.

According to the present invention there is provided a composition according to claim 1.

It has now been found, surprisingly, that the compositions, particularly aqueous compositions, according to the invention have good storage stability.

However, the compositions according to the invention can have also further surprising advantageous properties. Examples of such advantageous properties that may be mentioned are: advantageous behaviour during formulation and/or upon application, for example upon dilution or tank-mixing with other products. Other examples of such advantageous properties that may be mentioned are improved characteristics of the plants including: crop yields, less dead basal leaves, stronger tillers, greener leaf color, less fertilizers needed, less seeds needed, less plant verse (lodging) and/or improved plant vigor.

The first compound of the composition according to the invention is 3-difluoromethyl-1-methyl-1 H-pyrazole-4-carboxylic acid (2-bicyclopropyl-2-yl-phenyl)-amide having the formula (I). 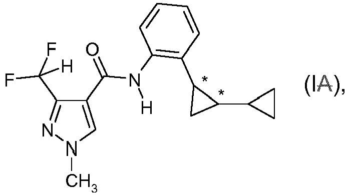 The compound of formula (I) is described in WO 03/74491 and has two chiral centers (highlighted by asterisks above) and accordingly occurs in two "trans-isomers" (3-difluoromethyl-1-methyl-1 H-pyrazole-4-carboxylic acid [2-((1S,2R)-bicyclopropyl-2-yl)-phenyl]-amide and 3-difluoromethyl-1-methyl-1 H-pyrazole-4-carboxylic acid [2-((1R,2S)-bicyclopropyl-2-yl)-phenyl]-amide) and in two "cis-isomers" (3-difluoromethyl-1-methyl-1 H-pyrazole-4-carboxylic acid [2-((1R,2R)-bicyclopropyl-2-yl)-phenyl]-amide and 3-difluoromethyl-1-methyl-1 H-pyrazole-4-carboxylic acid [2-((1S,2S)-bicyclopropyl-2-yl)-phenyl]-amide. As seed treatment fungicide the compound of formula (I) is preferably used in the form of a racemic mixture of all four isomers with a content of "trans-isomers" from 85 to 99 % by weight.

Cyprodinil can be used either in free form or as a salt or metal complex thereof. In one embodiment of the invention, cyprodinil is used in the free form.

The term "C₁₈-fatty acid" means a fatty acid with 18 carbon atoms, the preferred C₁₈-fatty acid being oleic acid. An advantage of this embodiment of the invention is that oleic acid is less expensive than linoleic acid or linolenic acid.

In general, the weight ratio of the compound of formula (I) to cyprodinil is from 20:1 to 1:20; preferably from 10:1 to 1:10; more preferably from 5:1 to 1:5; and even more preferably from 2:1 to 1:2.

In general, the weight ratio of the unsaturated C₁₈-fatty acid to cyprodinil is from 4:1 to 1:4; more preferably 7:3 to 3:7; even more preferably 3:2 to 2:3, yet even more preferably from 3:2 to 1:1. In one embodiment, said weight ratio is about 56:44.

A further aspect of the invention is an aqueous composition comprising the compounds (i), (ii) and (iii) according to the invention. Said composition is preferably used as a seed treatment composition.

Accordingly, the invention relates also to an aqueous composition comprising:
(i) 3-difluoromethyl-1-methyl-1 H-pyrazole-4-carboxylic acid (2-bicyclopropyl-2-yl-phenyl)-amide;
(ii) cyprodinil; and
(iii) an unsaturated C₁₈-fatty acid selected from oleic acid, linoleic acid and linolenic acid.

The present invention provides a composition as described herein wherein the compound of the formula (I) is 3-difluoromethyl-1-methyl-1H-pyrazole-4-carboxylic acid (2-bicyclopropyl-2-yl-phenyl)-amide.

According to the invention the term "aqueous composition" denotes a composition, which comprises one or more liquid phases, one of them being aqueous, and may comprise additionally one or more non-liquid-phases, such as solid phases. Typically, the predominant phase by weight is an aqueous phase and is called the "continuous phase".

In a preferred embodiment of the invention, the aqueous composition comprise at least 1% by weight, more preferably at least 2% by weight, of the compound of formula (I) in addition to at least 1% by weight cyprodinil, more preferably at least 2% by weight cyprodinil. According to the invention all "% by weight"-values are calculated based on the weight of the total composition.

In a further preferred embodiment the aqueous composition comprises:
(a) from 1 to 40% by weight, more preferably from 1 to 20% by weight, yet more preferably from 1 to 10% by weight, and most preferably from 1 to 5% by weight, of the compound of formula (I);
(b) from 1 to 40% by weight, more preferably from 1 to 20% by weight, yet more preferably from 1 to 10% by weight, and most preferably from 1 to 5% by weight, of cyprodinil; and
(c) from 1 to 40% by weight, more preferably from 1 to 20% by weight, yet more preferably from 1 to 10% by weight, and most preferably from 1 to 5% by weight, of the unsaturated C₁₈-fatty acid.

The term "storage stability" as applied to an "aqueous composition" means generally that the aqueous composition does not deteriorate for a typical storage time-period, when stored within a range of temperatures, which include extreme temperatures that can be experienced under normal storage conditions. The term "deteriorate" as applied to an "aqueous composition" means that the "characteristics of relevance to the end-user" of the undiluted composition or of the composition diluted in water - to give concentrations likely to be applied by the end-user - do not worsen during the above mentioned storage conditions. "Characteristics of relevance to the end-user" are characteristics related to the intended use. Said intended use can be, but is not limited to the use of the composition diluted in water. Examples of such relevant characteristics are: worsening of visual appearance of the formulation (e.g. flocculation, additional phase-separation, sediment formation); minimal or no crystal growth in the liquid composition during storage time; minimal or no crystal growth on dilution in water; complete redispersion of any non-emulsified residue after dilution in water and/or small uniform emulsion droplets on dilution in water. According to the invention "crystal development" means non-acceptable crystal growth under commercial considerations, such as any crystal growth that may reduce the ease of handling of the composition by the user. Examples of such non-acceptable crystal growth are (i) the development of crystals within the composition leading to accelerated sedimentation and therefore loss of active ingredient or (ii) development of crystals when the composition is diluted in water, which may cause filter/apparatus blockage during application by the end-user.

The commercial products sold to the end-users are typically referred to as "concentrates". In many instances, the end-user will employ diluted formulations (such as, for example, a 1:4 dilution with water), but in some cases the concentrates can also be used without dilution. The "diluted formulations", e.g. the main application-form of the formulation according to the invention, may, for example, contain from 0.01 to 5% by weight of the compound of formula (I), from 0.01 to 5% by weight of cyprodinil and from 0.01 to 5% by weight of of the unsaturated C₁₈-fatty acid.

Aqueous compositions comprising (i) the compound of formula (I), (ii) cyprodinil and (iii) the unsaturated C₁₈-fatty acid selected from oleic acid, linoleic acid and linolenic acid can be, for example, but are not limited to the following seed treatment formulations: emulsions, solutions, capsule suspensions, suspo-emulsions or micro-emulsions. In the seed treatment industry, suspo-emulsions may also be referred to under the broader term of "flowable concentrate" or "dispersible concentrate" and emulsions may also be referred to as "oil-in-water-emulsions". Whereas emulsions typically have droplet-sizes of about 1 to 10 micrometers, micro-emulsions typically have droplet-sizes of less than 1 micrometer.

In one embodiment of the invention, the aqueous composition comprises a continuous aqueous phase and at least one dispersed phase, which is stabilized by at least one dispersant. The dispersed phases can be liquid or solid phases, in such cases the dispersant can also be referred to as emulsifier or particle dispersant, respectively. Examples of this embodiment are: emulsions or micro-emulsions (at least one liquid dispersed phase); capsule suspensions (at least one solid dispersed phase); and suspo-emulsions (at least one liquid and at least one solid dispersed phase). Preferred are suspo-emulsions, emulsions or micro-emulsions; more preferred are suspo-emulsions.

With this embodiment compositions comprising a continuous aqueous phase and at least one dispersed liquid phase, which is stabilized by at least one dispersant, are preferred.

Within this embodiment compositions are further preferred, wherein a liquid dispersed phase comprises cyprodinil and the unsaturated C₁₈-fatty acid. Generally, substantially all cyprodinil and unsaturated C₁₈-fatty acid being present in the composition are comprised in said liquid dispersed phase.

In preferred compositions according to the invention a single liquid dispersed phase is present, which generally comprises substantially all cyprodinil and unsaturated C₁₈-fatty acid being present in the composition.

Within this embodiment compositions are further preferred, wherein a solid dispersed phase comprises the compound of formula (I).

Within this embodiment compositions in the form of suspoemulsions are preferred, wherein a liquid dispersed phase comprises cyprodinil and the unsaturated C₁₈-fatty acid selected from oleic acid, linoleic acid and linolenic acid and wherein a solid dispersed phase comprises the compound of formula (I).

The present invention still further provides a composition according to claim 2 wherein the weight ratio of the unsaturated C₁₈-fatty acid to cyprodinil is from 4:1 to 1:4. In a particular embodiment the composition comprises at least 1% by weight cyprodinil. In a further embodiment the composition comprises from 1 to 10% by weight cyprodinil.

According to the invention, a "dispersant" is typically a non-ionic, anionic, cationic or amphoteric dispersant having good emulsifying and/or particle dispersing properties. According to the invention a single dispersant or two or more dispersants may be present. If a single dispersant is chosen, which has good emulsifying as well as particle dispersing properties, such a single dispersant may be sufficient even in the case of a liquid and a solid dispersed phase being present. If two dispersants are present, typically one is an anionic and one is a non-ionic dispersant. The dispersants generally applicable in formulation technology are well known to the person skilled in the art. Among the non-ionic dispersants there may be mentioned: ethoxylated fatty alcohols; ethoxylated tristyrylphenol; alkoxylated nonylphenol; ethylene oxide/propylene oxide copolymers; alkoxylated butanol, for example "Toximul 8320"®, "Witconol NS-500LQ"®, "Atlas G-5000"®, "Antarox B/848"® or "Emulsogen 3510"®; polymers of polyvinylpyrrolidone; sorbitan-trioleate; ethoxylated sorbitan-trioleate, oleyl-polyglycolethers, such as "Genapol O100" ® or "Agnique FOH 181-10" ®; or modified poylester dispersants, such as "Hypermer A70"® or "Atlox 4914" ®.

Among the anionic dispersants there may be mentioned polyacrylic acid salts; lignosulphonic acid salts; phenolsulphonic or (mono- or di-alkyl)naphthalenesulphonic acid salts; laurylsulfate salts; ethoxylated lignosulphonic acid salts; ethoxylated fatty acids; substituted phenols (in particular alkylphenols or arylphenols, such as mono- and di-polyoxyalkylene alkylphenol) with phosphates; alkoxylated alkylphenol carboxylates or sulfates; salts of sulphosuccinic acid esters; ethoxylated phosphated or sulfated tristyrylphenols, such as "Soprophor 4D 384"®, "Agnique TSP-16SA-B", "Dispersogen GRTE" or "Steol TSP-16 N"; salts of maleic acid polymers, such as "Sokalan CP9"®; or dodecyl-benzene sulfonic acid calcium salt.

Among the cationic dispersants there may be mentioned ethoxylated fatty amines.

According to the invention "alkoxylated" means substituted with ethylene oxid and/or propylene oxid units.

An example of a dispersant having mainly emulsifying properties is sorbitan-trioleate. An example of a dispersant having mainly particle dispersing properties is ethoxylated tristyrylphenol sulfate ammonium salt.

An example of a dispersant having both emulsifying and particle dispersing properties is an ethylene oxide/propylene oxide copolymer.

Compositions according to the invention, which contain at least one dispersed phase, typically include from 1 to 69% by weight of at least one dispersant, preferably from 1 to 20% by weight, more preferably from 5 to 20% by weight.

In another embodiment of the invention, the compound of formula (I), cyprodinil and the unsaturated C₁₈-fatty acid are solubilized by at least one solubilizing agent in the aqueous continuous phase. A typical example of this embodiment is a solution. Said solubilizing agent is able to completely dissolve the compound of formula (I), cyprodinil and the unsaturated C₁₈-fatty acid in the aqueous phase and is typically present in an amount of 5 to 40 % by weight.

The compositions according to the invention typically comprise also further formulation adjuvants. According to the invention, the term "further formulation adjuvant" denotes a natural or synthetic, organic or inorganic material with which the active ingredients, the unsaturated C₁₈-fatty acid and water are combined in order to facilitate the application of the active ingredients to the plant propagation material. These adjuvants are hence generally inert, and must be agriculturally acceptable, in particular to the plant propagation material being treated. Typical adjuvants are, for example, carriers, diluents, solvents, fillers, biocides, anti-freeze agents, stickers, thickeners, antifoam agents and pigments.

"Carriers" are generally liquid carriers (alcohols, ketones, petroleum fractions, aromatic or paraffinic hydrocarbons, chlorinated hydrocarbons, liquefied gases, and the like) or solid carriers. Suitable liquid carriers are, but are not restricted to: aromatic hydrocarbons, in particular the fractions C₈ to C₁₂, such as xylene mixtures or substituted naphthalenes, phthalic esters such as dibutyl or dioctyl phthalate, dipropylene glycol dibenzoate, aliphatic hydrocarbons such as cyclohexane or paraffins, alcohols and glycols as well as their ethers, esters and diesters, such as ethylene glycol monomethyl ether, ketones such as cyclohexanone, strongly polar solvents such as, but not restricted to, N-methyl-2-pyrrolidone, dimethyl sulfoxide or dimethylformamide, and, if appropriate, epoxidized vegetable oils or soybean oil. Suitable solid carriers are, but are not restricted to: aluminium silicate, urea, sodium sulphate, talc, calcium sulphate or potassium sulphate. According to the invention a single carrier or two or more carriers may be present in the compositions according to the invention. The compositions according to the invention include from 0 to 69% by weight of a carrier, preferably from 0 to 50% by weight, more preferably from 0 to 35% by weight, most preferably from 0 to 25% by weight.

Compositions according to the invention may comprise one or more further agrochemical active ingredients, such as fungicides, insecticides, nematocides, acaricides, bactericides, molluscicides, rodenticides and/or plant-growth regulators. Examples of especially suitable further active ingredients, that can be present in the compositions according to the invention, are compounds selected from the following group P:
Group P: especially suitable further active ingredients that can be present in the compositions according to the invention:
   fludioxonil; azoxystrobin; benalaxyl; benalaxyl-M; bitertanol; boscalid; carboxin; carpropamid; chlorothalonil; copper; cyazofamid; cymoxanil; cyproconazole; difenoconazole; dimethomorph; famoxadone; fenamidone; fenhexamide; fenpiclonil; fluazinam; fluquinconazole; fluoxastrobin; flutolanil; flutriafol; guazatine; hexaconazole; hymexazole; imazalil; ipconazole; iprodione; mancozeb; metalaxyl; mefenoxam; metconazole; metrafenone; myclobutanil; nuarimol; oxpoconazole; paclobutrazol; pencycuron; penthiopyrad; picoxystrobin; prochloraz; procymidone; prothioconazole; pyraclostrobin; pyrimethanil; pyroquilon; silthiofam; tebuconazole; tetraconazole; thiabendazole; thiram; triadimenol; triazoxide; trifloxystrobin; triticonazole; epoxiconazole; propiconazole; fenpropimorph; fenpropidin; a compound of formula F-1 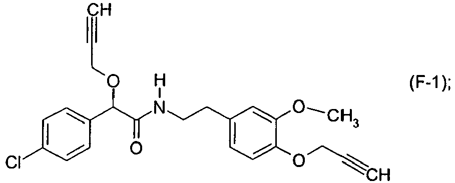 a compound of formula F-2 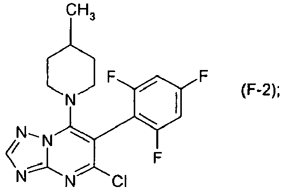 a compound of formula F-3 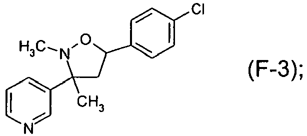
N-[2-(1,3-dimethylbutyl)-phenyl]-1,3-dimethyl-1H-pyrazole-4-carboxamide (compound F-4.1); N-[2-(1,3-dimethylbutyl)-phenyl]-5-fluoro-1,3-dimethyl-1H-pyrazole-4-carboxamide (compound F-4.2); N-[2-(1,3-dimethylbutyl)-phenyl]-5-chloro-1,3-dimethyl-1H-pyrazole-4-carboxamide (compound F-4.3); 3-(difluoromethyl)-N-[2-(1,3-dimethylbutyl)-phenyl]-1-methyl-1H-pyrazole-4-carboxamide (compound F-4.4); 3-(trifluoromethyl)-N-[2-(1,3-dimethylbutyl)-phenyl]-5-fluoro-1-methyl-1 H-pyrazole-4-carboxamide (compound F-4.5); 3-(trifluoromethyl)-N-[2-(1,3-dimethylbutyl)-phenyl]-5-chloro-1-methyl-1H-pyrazole-4-carboxamide (compound F-4.6); 1,3-dimethyl-N-[2-(1,3,3-trimethylbutyl)-phenyl]-1H-pyrazole-4-carboxamide (compound F-4.7); 5-fluoro-1,3-dimethyl-N-[2-(1,3,3-trimethylbutyl)-phenyl]-1 H-pyrazole-4-carboxamide (compound F-4.8); 3-(difluoromethyl)-1-methyl-N [2-(1,3,3-trimethylbutyl)-phenyl]-1H-pyrazole-4-carboxamide (compound F-4.9); 3-(trifluoromethyl)-1-methyl-N-[2-(1,3,3-trimethylbutyl)-phenyl]-1 H-pyrazole-4-carboxamide (compound F-4.10); 3-(trifluoromethyl)-5-fluor-1-methyl-N-[2-(1,3,3-trimethylbutyl)-phenyl]-1H-pyrazole-4-carboxamide (compound F-4.11); 3-(trifluoromethyl)-5-chloro-1-methyl-N-[2-(1,3,3-trimethylbutyl)-phenyl]-1 H-pyrazole-4-carboxamide (compound F-4.12); 3-(trifluoromethyl)-N-[2-(1,3-dimethylbutyl)-phenyl]-1-methyl-1H-pyrazole-4-carboxamide (compound F-4.13); N-[2-(1,3-dimethylbutyl)-phenyl]-2-iodobenzamide (compound F-4.14); 2-iodo-N-[2-(1,3,3-trimethylbutyl)-phenyl]-benzamide (compound F-4.15); N-[2-(1,3-dimethylbutyl)-phenyl]-2-(trifluoromethyl)-benzamide (compound F-4.16); 2-(trifluoromethyl)-N-[2-(1,3,3-trimethylbutyl)-phenyl]-benzamide (compound F-4.16); thiamethoxam; clothianidine, imidacloprid, tefluthrin; abamectin;
acibenzolar-S-methyl and gibberelic acid.

Most of the compounds of group P are known and included in "The Pesticide Manual" [The Pesticide Manual - A World Compendium; Thirteenth Edition; Editor: C. D. S. Tomlin; The British Crop Protection Council]. Said compounds are referred to hereinabove by their so-called common names, which are also listed in the pesticide manual. The compound of formula F-1 is described in WO 01/87822 and also known under the name "mandipropamid"; the compound of formula F-2 is registered under CAS-214706-53-3; the compound of formula F-3 is described in EP-1-035-122 and is registered under CAS-291771-99-8 and CAS-291771-83-0. The compounds F-4.1 to F-4.17 are described in WO 03/10149, JP-A-10-251240, DE-A-103-03-589, EP-0-824-099-A1 and DE-A-102-29-595; a preferred compound of said compounds is compound F-4.2, which is described in WO 03/10149.

In one embodiment of the invention, the composition according to the invention comprises one further agrochemical active ingredient selected from the group P. An example is a composition according to the invention that comprises the compound of formula (I), cyprodinil, oleic acid and further the first compound from the group P, which is fludioxonil.

In another embodiment of the invention, the composition according to the invention comprises more than one further agrochemical active ingredient selected from the group P. Examples are:
a composition according to the invention comprising the compound of formula (I), cyprodinil, oleic acid and further the compounds fludioxonil and difenoconazole;
a composition according to the invention comprising the compound of formula (I), cyprodinil, oleic acid and further the compounds fludioxonil, difenoconazole and mefenoxam;
a composition according to the invention comprising the compound of formula (I), cyprodinil, oleic acid and further the compounds fludioxonil and thiamethoxam;
a composition according to the invention comprising the compound of formula (I), cyprodinil, oleic acid and further the compounds fludioxonil, difenoconazole and thiamethoxam; and
a composition according to the invention comprising the compound of formula (I), cyprodinil, oleic acid and further the compounds fludioxonil, difenoconazole, mefenoxam and thiamethoxam.

The compositions according to the invention may be produced in conventional manner, e.g. by mixing the compound of formula (I), cyprodinil, the unsaturated C₁₈-fatty acid, water and optionally the dispersant(s), the solubilizing agent(s), further active ingredients and/or further formulation adjuvants.

Preferably, in a first step a mixture comprising cyprodinil and the unsaturated C₁₈-fatty acid is produced. This is typically achieved by mixing cyprodinil and the unsaturated C₁₈-fatty acid at temperatures, where cyprodinil is solid and the unsaturated C₁₈-fatty acid is liquid. Preferably all cyprodinil is dissolved in the unsaturated C₁₈-fatty acid thus obtaining an oil comprising cyprodinil and the unsaturated C₁₈-fatty acid. Dispersants, further active ingredients and/or formulation adjuvants can be present in said mixture, generally at least one dispersant is present in said mixtures. Said mixture can then be combined with water, the compound of formula (I) and optionally further dispersants, active ingredients and/or formulation adjuvants.

One way to produce compositions according to the invention, which are suspo-emulsions, is to:
(a) produce a mixture of cyprodinil and the unsaturated C₁₈-fatty acid;
(b) add at least one dispersant to said mixture;
(c) produce an aqueous suspension of the compound of formula (I) with at least one dispersant, wherein said dispersant can be the same as used in step b) and wherein the suspension optionally comprises further active ingredients;
(d) reduce the particle size of the solid particles present in said aqueous suspension, preferably by wet milling; and
(e) add the mixture to the aqueous suspension under agitation.

Another way to produce the compositions according to the invention, which are suspo-emulsions, is to:
(a) produce a mixture of cyprodinil and the unsaturated C₁₈-fatty acid;
(b) add at least one dispersant to said mixture;
(c) make an emulsion by adding said mixture to water under agitation;
(d) produce an aqueous suspension of the compound of formula (I) with at least one dispersant, wherein said dispersant can be the same as used in step b) and wherein the suspension optionally comprises further active ingredients;
(e) reduce the particle size of the solid particles present in said aqueous suspension, preferably by wet milling; and
(f) add the emulsion to the aqueous suspension.

The invention further relates to a method of controlling diseases on plants which comprises applying to the propagation material thereof a composition according to the invention or a diluted formulation of a composition according to the invention.

The invention further relates to a method of controlling diseases on plants and/or to the propagation material thereof which comprises applying to the plant and/or to the propagation material thereof a composition according to the invention or a diluted formulation of a composition according to the invention.

Plants typically comprise the following species of plants: cereals, such as wheat, barley, rye or oats; beet, such as sugar beet or fodder beet; leguminous plants, such as beans, lentils, peas or soybeans; oil plants, such as rape, mustard, poppy, sunflowers, castor oil plants or groundnuts; cucumber plants, such as marrows, cucumbers or melons; fibre plants, such as cotton, flax, hemp or jute; vegetables, such as spinach, lettuce, asparagus, cabbages, carrots, onions, tomatoes, potatoes, cucurbits or paprika; lauraceae, such as avocados or camphor; maize; tobacco; rice; turf or ornamentals, such as flowers, shrubs, broad-leaved trees or evergreens, for example conifers. This list does not represent any limitation.

The term plant also includes genetically modified plants including those plants which have been rendered resistant to herbicides, insecticides, fungicides or have been modified in some other way such as to enhance yield, drought tolerance or quality. Such genetically modified plants may have been modified via recombinant nucleic acid techniques well know to the person skilled in the art.

The term "plant propagation material" is understood to denote generative parts of the plant, such as seeds, which can be used for the multiplication of the latter, and vegetative material, such as cuttings or tubers, for example potatoes. There may be mentioned for example seeds (in the strict sense), roots, fruits, tubers, bulbs, rhizomes and parts of plants. Germinated plants and young plants which are to be transplanted after germination or after emergence from the soil, may also be mentioned. These young plants may be protected before transplantation by a total or partial treatment by immersion. Preferably "plant propagation material" is understood to denote seeds.

In one embodiment of the invention, the composition according to the invention is co-applied together with one or more further agrochemical active ingredients, such as fungicides, insecticides, nematocides, acaricides, bactericides, molluscicides, rodenticides and/or plant-growth regulators. Examples of such further agrochemical active ingredients are listed within the group P above.

According to the invention, "co-applied" includes all combinations of compositions according to the invention and the further agrochemical active ingredient(s); for example in a single "ready-mix" form; in a combined mixture composed from separate formulations, such as a "tank-mix"; in a combined seed treatment use of the separate formulations when applied in a sequential manner, i.e. one after the other (the order of application is not essential for working the present invention); and in a combined seed treatment/foliar application use, wherein the composition according to the invention is used for seed treatment and the other agrochemical active ingredient is used in foliar application on the same crop. In said combined seed treatment/foliar application use, the further agrochemical active ingredient can be a herbicide.

The amount of a composition of the invention or their diluted formulation to be applied, will depend on various factors, such as the subject of the treatment or the type of fungi to be controlled.

The method according to the present invention is particularly effective to protect plants or plant propagation material thereof against seedborne and soilborne diseases, such as Alternaria spp., Ascochyta spp., Botrytis cinerea, Cercospora spp., Claviceps purpurea, Cochliobolus sativus, Colletotrichum spp., Diplodia maydis, Epicoccum spp., Erysiphe spp., Fusarium graminearum, Fusarium moniliforme, Fusarium oxysporum, Fusarium proliferatum, Fusarium solani, Fusarium subglutinans, Gäumannomyces graminis , Helminthosporium spp., Microdochium nivale, Penicillium spp., Phakospora spp., Phakospora pachyrhizi, Phoma spp., Phomopsis spp., Psudocercosporella spp., Puccinia spp., Pyrenophora graminea, Pyricularia oryzae, Rhizoctonia solani, Rhizoctonia cerealis, Sclerotinia spp., Septoria spp., Sphacelotheca reilliana, Thielaviopsis basicola, Tilletia spp., Typhula incarnata, Urocystis occulta, Ustilago spp. or Verticillium spp.; in particular against pathogens of cereals, such as wheat, barley, rye or oats; maize; rice; cotton; soybean; turf; sugarbeet; oil seed rape; potatoes; pulse crops, such as peas, lentils or chickpea; and sunflower.

The compositions according to the invention are particularly useful for controlling the following plant diseases in the following plants: Ascochyta species in pulse crops; Botrytis cinerea (gray mold) in sunflower; Cochliobolus sativus in cereals and rice; Colletotrichum species in pulse crops; Diplodia maydis in maize; Erysiphe spp. in cereals and vegetables; Fusarium graminearum in cereals, cotton, soya, vegetables and maize; Gäumannomyces graminis in cereals and lawns; Helminthosporium maydis in maize; Helminthosporium oryzae in rice; Helminthosporium solani on potatoes; Helminthosporium graminearum in cereals; Microdochium nivale in wheat and rye; Phakospora pachyrhizi in soya; Phoma spp. in sunflower, sugar beet, vegetables and oil seed rape; Phomopsis spp. in soya, cotton and vegetables; Puccinia spp. in cereals and vegetables; Pyrenophora graminea in barley; Pyricularia oryzae in rice; Rhizoctonia species in cotton, soybean, cereals, maize, potatoes, rice, sugar beets, sunflower, vegetables, oil seed rape and lawns; Sclerotinia homeocarpa in lawns; Sphacelotheca reilliana in maize; Thielaviopsis basicola in cotton; Tilletia species in cereals; Typhula incarnata in barley; Urocystis occulta in rye; and Ustilago species in cereals and maize.

When applied to seeds the compound of formula (I) is applied at a rate of 0.001 to 10 g of a.i. per kg of seed, preferably from 0.01 to 1 g per kg of seed, cyprodinil is applied at a rate of 0.001 to 10 g of a.i. per kg of seed, preferably from 0.01 to 1 g per kg of seed, and the unsaturated C₁₈-fatty acid is applied at a rate of 0.001 to 10 g of compound per kg of seed, preferably from 0.01 to 1 g per kg of seed.

The combination according to the invention can also advantageously be used to make other formulation types, such as a powder for dry seed treatment (DS), a water dispersible powder for seed treatment (WS), a gel for seed treatment (GF), an emulsion concentrate (EC), a suspension concentrate (SC), a water dispersible granule (WG), an emulsifiable granule (EG), an oil dispersion (OD), an oil miscible flowable (OF), an oil miscible liquid (OL), a soluble concentrate (SL), an ultra-low volume suspension (SU), an ultra-low volume liquid (UL), a technical concentrate (TK) or a wettable powder (WP). Said other formulation types comprise typically one or more dispersants and/or other formulation adjuvants as described above.

The Examples which follow serve to illustrate the invention.

### Formulation Compositions

| Composition in % weight per volume | | P1 | P2 |
|---|---|---|---|
| | | with oleic acid | without oleic acid |
| 1 | Compound of formula (I) | 5 | 5 |
| 2 | Fludioxonil | 2.5 | 2.5 |
| 3 | Cyprodinil | 2.5 | 2.5 |
| 4 | Oleic acid | 2.8 | 0 |
| 5 | 1,2-propylene glycol | 8 | 8 |
| 6 | copolymer Butanol PO/EO | 2 | 2 |
| 7 | modified polyester non-ionic surfactant | 2 | 2 |
| 8 | oleyl-polyglycolether 10 | 8 | 8 |
| 9 | ethoxylated tristyrylphenol sulfate, ammonium salt | 2 | 2 |
| 10 | polymer based on maleic acid, sodium salt | 1 | 1 |
| 11 | monoazo-pigment calcium salt | 8 | 8 |
| 12 | non-ionic, dimethylpolysiloxane oil based aqueous emulsion | 0.5 | 0.5 |
| 13 | heteropolysaccharide (xantan gum) | 0.15 | 0.15 |
| 14 | 1,2-benzisothiazol-3-one in sol. approx. 20% | 0.1 | 0.1 |
| 15 | tap water | 62.44 | 65.24 |
| | Total (corresponds to 100mL) | 107 | 107 |

### Preparation

### Formulation P1: suspo-emulsion for seed treatment

25 g cyprodinil (3) was mixed with 28.1 g oleic acid (4) by stirring at 50°C. After complete dissolution of cyprodinil, the formed cyprodinil solution was put aside to cool down to room temperature. In another vessel, 80 g of 1,2-propylene glycol (5), 20 g of an ethoxylated tristyrylphenol sulphate ("Soprophor 4D 384" ®, (9) and 20 g of a copolymer of butanol and polyoxypropylene/polyoxyethylene ("Toximul 8320" ®, (6) were mixed at 40°C. 525 g water (15) was subsequently added under stirring. 5 g antifoam agent ("Rhodorsil 426 R" ®, (12) and 1 g of a 20% solution of 1,2-benzisothiazolin-3-one ("Proxel GXL" ®, 14) were added. After an aqueous solution was formed, 50 g of SYN524464 (1), 25 g of Fludioxonil (2) and 80 g of a pigment ("pigment red 48:2" ®, (11) were suspended into the solution, forming a suspension. The suspension was wetmilled to reach a suspension with a median particle size of approximately 1-5 micrometers. Then 20 g of modified polyester non-ionic dispersant ("Atlox 4914" ®, (12), 10 g sodium salt of maleic acid polymer ("Sokalan CP9" ®, 10) and 80 g of melted oleyl-polyglycolether ("Genapol O-100" ®, 8) were added under stirring. Subsequently, the solution of cyprodinil in oleic acid (3+4) was added under high-shear mixing (Polytron, 5000 rpm), forming a suspo-emulsion. In a final step 3 g xanthan gum (in form of a 3% aqueous gel, (13) was added to form 1070mL suspo-emulsion according to its density of 1.07g/mL.

This suspo-emulsion can be used undiluted or diluted up to 1:10 with water for seed treatment applications. As "ethoxylated tristyrylphenol sulfate, ammonium salt" can be used: "Soprophor 4D 384"®, "Agnique TSP-16SA-B", "Dispersogen GRTE" or "Steol TSP-16 N". As "butanol-polyoxypropylene/polyoxyethylene-copolymer" can be used: "Toximul 8320"®, "Witconol NS-500LQ"®, "Atlas G-5000"®, "Antarox B/848"® or "Emulsogen 3510"®. As "sodium salt of a maleic acid polymer" can be used: "Sokalan CP9"®. As "modified polyester non-ionic dispersant" can be used: "Hypermer A70"® or "Atlox 4914" ®. As oleyl-polyglycolether can be used "Genapol O100" ® or "Agnique FOH 181-10" ®.

### Formulation P2:

Same preparation as provided above, but oleic acid (4) was replaced with the corresponding amount of tap water.

### Storage test

After preparation the formulations were divided in 100mL glass jars and kept under certain temperatures as indicated with the results below.

### Comparison of stored samples

The samples from storage at different temperatures where tested for wet sieve residues according to standard methods known to the person skilled in the art.

### Results

Both formulations were tested after 3 months of storage time where a temperature of-10°C and 50°C was kept for one day (24h) each and repeated in cycles. Although both formulations had a median particle size of 2.2 ± 0.1µm after manufacturing, the formulation without oleic acid showed a significantly larger median particle size (9.1µm) after storage while the formulation with oleic acid developed a median particle size of only 7.3µm.

| | With oleic acid | Without oleic acid |
|---|---|---|
| RT (20-25°C) | 0.002% | 0.002% |
| 35°C | 0.015% | 0.35% |
| 45°C | 0.005% | 0.31% |

The wet sieve residues (in percent of the sieved formulation amount) after a 5 month storage time showed even more difference also in elevated (but constant) temperatures. Microscopic characterisation of the dried residues showed that cyprodinil crystals had been formed. This leads to the conclusion, that the oleic acid reduces the growth of cyprodinil crystals.

## Claims

1. A composition comprising (i) 3-difluoromethyl-1-methyl-1 H-pyrazole-4-carboxylic acid (2-bicyclopropyl-2-yl-phenyl)-amide; (ii) cyprodinil and (iii) an unsaturated C18-fatty acid selected from oleic acid, linoleic acid and linolenic acid.

2. A composition according to claim 1, wherein the weight ratio of the unsaturated C18-fatty acid to cyprodinil is from 4:1 to 1:4.

3. A composition according to claim 1 which is an aqueous composition.

4. A composition according to claim 3, wherein the composition comprises a continuous aqueous phase and at least one dispersed phase, which is stabilized by at least one dispersant.

5. A composition according to claim 4, wherein at least one dispersed phase is a liquid phase.

6. A composition according to claim 5, wherein a liquid dispersed phase comprises cyprodinil and the unsaturated C18-fatty acid.

7. A composition according to claim 6, wherein the composition is a suspo-emulsion and wherein a solid dispersed phase comprises the 3-difluoromethyl-1-methyl-1H-pyrazole-4-carboxylic acid (2-bicyclopropyl-2-yl-phenyl)-amide.

8. A composition according to claims 3 or 7, wherein the weight ratio of the unsaturated C18-fatty acid to cyprodinil is from 4:1 to 1:4.

9. A composition according to claims 3 or 7, wherein the composition comprises at least 1% by weight cyprodinil.

10. A composition according to claims 3 or 7, wherein the composition comprises from 1 to 10% by weight cyprodinil.

11. A method of controlling diseases on plants which comprises applying to the propagation material thereof a composition according to any one of claims 1 to 10 or a dilution of said composition.

12. A method of controlling diseases on plants which comprises applying to the propagation material thereof a composition according to claim 3 or a dilution of said composition.

## Patentansprüche

1. Zusammensetzung, umfassend (i) 3-Difluormethyl-1-methyl-1H-pyrazol-4-carbonsäure-(2-bicyclopropyl-2-ylphenyl)amid, (ii) Cyprodinil und (iii) eine ungesättigte C18-Fettsäure ausgewählt aus Ölsäure, Linolsäure und Linolensäure.

2. Zusammensetzung nach Anspruch 1, wobei das Gewichtsverhältnis von ungesättigter C18-Fettsäure zu Cyprodinil 4:1 bis 1:4 beträgt.

3. Zusammensetzung nach Anspruch 1, bei der es sich um eine wässrige Zusammensetzung handelt.

4. Zusammensetzung nach Anspruch 3, wobei die Zusammensetzung eine kontinuierliche wässrige Phase und mindestens eine dispergierte Phase, die durch mindestens einen Dispergator stabilisiert ist, umfasst.

5. Zusammensetzung nach Anspruch 4, wobei es sich bei mindestens einer dispergierten Phase um eine flüssige Phase handelt.

6. Zusammensetzung nach Anspruch 5, wobei eine flüssige dispergierte Phase Cyprodinil und die ungesättigte C18-Fettsäure umfasst.

7. Zusammensetzung nach Anspruch 6, wobei es sich bei der Zusammensetzung um eine Suspoemulsion handelt und wobei eine feste dispergierte Phase das 3-Difluormethyl-1-methyl-1H-pyrazol-4-carbonsäure-(2-bicyclopropyl-2-ylphenyl)amid umfasst.

8. Zusammensetzung nach Anspruch 3 oder 7, wobei das Gewichtsverhältnis von ungesättigter C18-Fettsäure zu Cyprodinil 4:1 bis 1:4 beträgt.

9. Zusammensetzung nach Anspruch 3 oder 7, wobei die Zusammensetzung mindestens 1 Gew.-% Cyprodinil umfasst.

10. Zusammensetzung nach Anspruch 3 oder 7, wobei die Zusammensetzung 1 bis 10 Gew.-% Cyprodinil umfasst.

11. Verfahren zur Bekämpfung von Krankheiten auf Pflanzen, welches das Aufbringen einer Zusammensetzung nach einem der Ansprüche 1 bis 10 oder einer Verdünnung der Zusammensetzung auf das Fortpflanzungsmaterial davon umfasst.

12. Verfahren zur Bekämpfung von Krankheiten auf Pflanzen, welches das Aufbringen einer Zusammensetzung nach Anspruch 3 oder einer Verdünnung der Zusammensetzung auf das Fortpflanzungsmaterial davon umfasst.

## Revendications

1. Composition comprenant (i) de l'acide 3-difluorométhyl-1-méthyl-1H-pyrazole-4-carboxylique (2-bicyclopropyl-2-ylphényl)amide ; (ii) du cyprodinil et (iii) un acide gras en C18 insaturé choisi parmi l'acide oléique, l'acide linoléique et l'acide linolénique.

2. Composition selon la revendication 1, où le rapport pondéral de l'acide gras en C18 insaturé au cyprodinil va de 4:1 à 1:4.

3. Composition selon la revendication 1, qui est une composition aqueuse.

4. Composition selon la revendication 3, où la composition comprend une phase aqueuse continue et au moins une phase dispersée, qui est stabilisée par au moins un agent dispersant.

5. Composition selon la revendication 4, où au moins une phase dispersée est une phase liquide.

6. Composition selon la revendication 5, où une phase dispersée liquide comprend du cyprodinil et l'acide gras en C18 insaturé.

7. Composition selon la revendication 6, où la composition est une suspo-émulsion et où une phase dispersée solide comprend l'acide 3-difluorométhyl-1-méthyl-1H-pyrazole-4-carboxylique (2-bicyclopropyl-2-ylphényl)amide.

8. Composition selon les revendications 3 ou 7, où le rapport pondéral de l'acide gras en C18 insaturé au cyprodinil va de 4:1 à 1:4.

9. Composition selon les revendications 3 ou 7, où la composition comprend au moins 1 % en poids de cyprodinil.

10. Composition selon les revendications 3 ou 7, où la composition comprend de 1 à 10 % en poids de cyprodinil.

11. Méthode de contrôle de maladies sur des plantes, comprenant l'application au matériel de propagation de celles-ci d'une composition selon l'une quelconque des revendications 1 à 10 ou d'une dilution de ladite composition.

12. Méthode de contrôle de maladies sur des plantes, comprenant l'application au matériel de propagation de celles-ci d'une composition selon la revendication 3 ou d'une dilution de ladite composition.
